# EUROPÄISCHE PATENTSCHRIFT

(11) **EP 2 205 904 B1**
(45) Veröffentlichungstag und Bekanntmachung des Hinweises auf die Patenterteilung: **25.05.2016**
(21) Anmeldenummer: 08848504.0
(22) Anmeldetag: 25.10.2008
(51) Int. Cl.: F23D 14/62, F16L 37/107, F16L 37/56

(54) **VORRICHTUNG ZUR BEREITSTELLUNG EINES GAS-/VERBRENNUNGSLUFT-GEMISCHS FÜR EINEN GASBRENNER**
DEVICE FOR PROVIDING A GAS/COMBUSTION AIR MIXTURE FOR A GAS BURNER
DISPOSITIF DESTINÉ À FOURNIR UN MÉLANGE GAZ/AIR DE COMBUSTION À UN BRÛLEUR À GAZ

(30) Priorität: 05.11.2007 DE 102007053028
(43) Veröffentlichungstag der Anmeldung: 14.07.2010
(73) Patentinhaber: Honeywell Technologies Sarl, 1180 Rolle (CH)
(72) Erfinder: THIEWES, Roelof, NL-7873 AS Odoorn (NL); VROLIJK, Enno, NL-7751 DX Dalen (NL)
(74) Vertreter: Sturm, Christoph
(86) Internationale Anmeldenummer: PCT/EP2008/009045
(87) Internationale Veröffentlichungsnummer: WO 2009/059703

(56) Entgegenhaltungen:
- EP-A- 1 099 906
- WO-A-02/077526
- DE-B3-102004 007 123

## Beschreibung

Die Erfindung betrifft eine Vorrichtung zur Bereitstellung eines Gas-Nerbrennungsluft-Gemischs für einen Gasbrenner nach dem Oberbegriff des Anspruchs 1. Eine solche Vorrichtung ist aus der EP 1 099 906 A1 bekannt.

Aus der DE 10 2004 007 123 B3 ist eine Vorrichtung zur Bereitstellung eines Gas-/Verbrennungsluft-Gemischs für einen Gasbrenner bekannt, die ein Gasregelgerät, eine Mischeinrichtung mit einer Venturi-Düse und ein Gebläse umfasst. Nach diesem Stand der Technik ist das Gasregelgerät mit der Mischeinrichtung und die Mischeinrichtung mit dem Gebläse verbunden, wobei die Mischeinrichtung stromaufwärts des Gebläses an einer Tragplatte des Gebläses angreift. Die Befestigung der Mischeinrichtung an der Tragplatte des Gebläses ist dabei über eine Dichteinrichtung abgedichtet.

Das Gebläse einer solchen Vorrichtung zur Bereitstellung eines Gas-Nerbrennungsluft-Gemischs kann im Betrieb in Folge der Rotation eines elektrischen Motors sowie eines Lüfterrads des Gebläses mechanische Vibrationen bzw. Schwingungen auslösen, die zu einer unerwünschten, störenden Geräuschentwicklung an der Vorrichtung zur Bereitstellung eines Gas-Nerbrennungsluft-Gemischs führen. Eine derartige Geräuschentwicklung wird als störend empfunden und muss demnach vermieden werden.

Hiervon ausgehend liegt der Erfindung das Problem zu Grunde, eine neuartige Vorrichtung zur Bereitstellung eines Gas-/Verbrennungsluft-Gemischs für einen Gasbrenner zu schaffen.

Die Mischeinrichtung und das Gebläse sind derant miteinander verbunden, dass zwischen einem Verbindungsabschnitt der Mischeinrichtung und einem Verbindungsabschnitt des Gebläses ein Vibrationsabsorber aus einem relativ weichen, elastischen Werkstoff derart angeordnet ist, dass der elastische Vibrationsabsorber den Verbindungsabschnitt der Mischeinrichtung konzentrisch umgibt.

Weil der Vibrationsabsorber zwischen dem Verbindungsabschnitt der Mischeinrichtung und dem Verbindungsabschnitt des Gebläses positioniert ist, absorbiert er durch das Gebläse ausgelöste mechanische Vibrationen bzw. Schwingungen und wirkt damit einer unerwünschten Geräuschentwicklung entgegen.

Im Sinne der hier vorliegenden Erfindung ist der Vorrichtung dadurch gekennzeichnet, dass der Verbindungsabschnitt des Gebläses den elastischen Vibrationsabsorber konzentrisch umgibt, wobei der elastische Vibrationsabsorber um den Verbindungsabschnitt der Mischeinrichtung herum gestülpt und in seiner Relativposition zum Verbindungsabschnitt der Mischeinrichtung da- durch fixiert ist, dass Vorsprünge des Verbindungsabschnitts der Mischeinrichtung in Ausnehmungen des Vibrationsabsorbers eingreifen.

Bevorzugte Weiterbildungen der Erfindung ergeben sich aus den Unteransprü-chen und der nachfolgenden Beschreibung. Nachfolgend werden Ausführungsbeispiel der Erfindung, ohne hierauf beschränkt zu sein, anhand der Zeichnung näher erläutert. In der Zeichnung zeigt:
- Fig. 1:: einen ausschnittsweisen Querschnitt durch eine erfindungsgemäße Vorrichtung zur Bereitstellung eines Gas-/Verbrennungsluft-Gemischs für einen Gasbrenner;
- Fig. 2:: einen Querschnitt durch die Anordnung der Fig. 1 in Schnittrichtung II-II; und
- Fig. 3:: ein Detail der die Anordnung der Fig. 1.

Die hier vorliegende Erfindung betrifft eine Vorrichtung zur Bereitstellung eines Gas-/Verbrennungsluft-Gemischs für einen Gasbrenner, wobei die Vorrichtung ein Gasregelgerät zur Bereitstellung eines Gasstroms, ein Gebläse zur Bereitstellung eines Verbrennungsluftstroms und eine Mischeinrichtung zur Mischung des Verbrennungsluftstroms und des Gasstroms und damit zur Bereitstellung des Gas-/Verbrennungsluft-Gemischs umfasst. Die Mischeinrichtung umfasst dabei eine Venturi-Düse und/oder eine Mess-Düse.

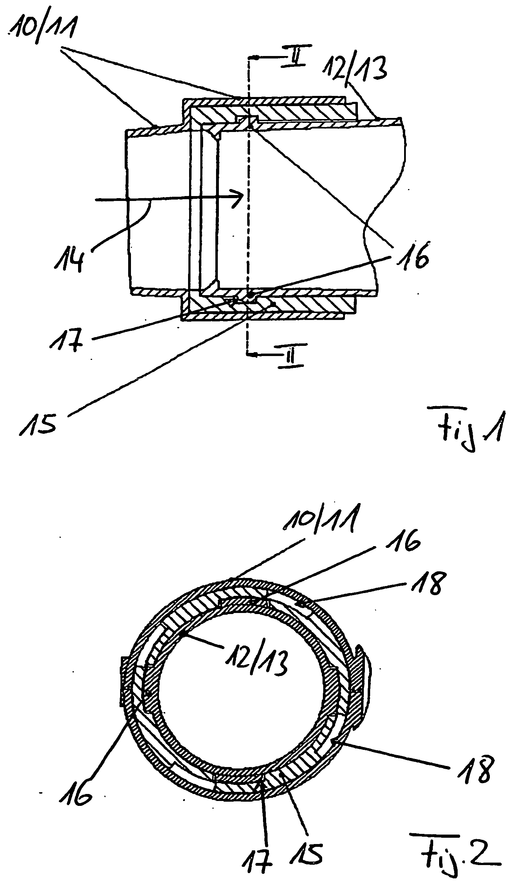

Die Mischeinrichtung und das Gebläse sind miteinander verbunden. Ebenso sind die Mischeinrichtung und das Gasregelgerät miteinander verbunden. Fig. 1 und 2 zeigen Querschnitte durch eine erfindungsgemäße Vorrichtung zur Bereitstellung eines Gas-Verbrennungsluft-Gemischs im Verbindungsbereich zwischen der Mischeinrichtung und dem Gebläse.

So zeigt Fig. 1 einen Verbindungsabschnitt 10 eines Gebläses 11 und einen Verbindungsabschnitt 12 einer Mischeinrichtung 13, wobei die Mischeinrichtung 13 und das Gebläse 11 derart miteinander verbunden sind, dass der Verbindungsabschnitt 10 des Gebläses 11 den Verbindungsabschnitt 12 der Mischeinrichtungen 13 konzentrisch umgibt. Wie bereits erwähnt, dient das Gebläse 11 der Bereitstellung eines Verbrennungsluftstroms, der das Gebläse 11 in Richtung des Pfeils 14 durchströmt und in die Mischeinrichtung 13 eintritt. Im gezeigten Ausführungsbeispiel ist demnach die Mischeinrichtung 13 stromabwärts des Gebläses 11 positioniert und greift stromabwärts des Gebläses 11 an demselben an. Es sei darauf hingewiesen, dass im Unterschied zum gezeigten Ausführungsbeispiel die Mischeinrichtung 13 auch stromaufwärts des Gebläses 11 an demselben angreifen kann.

Zwischen dem Verbindungsabschnitt 10 des Gebläses 11 und dem Verbindungsabschnitt 12 der Mischeinrichtung 13 ist ein Vibrationsabsorber 15 positioniert, wobei der Vibrationsabsorber 15 aus einem relativ weichen, elastischen Werkstoff gebildet ist. Insbesondere ist der Vibrationsabsorber 15 aus einem Elastomerwerkstoff gebildet.

Der Vibrationsabsorber kann mechanische Vibrationen bzw. Schwingungen, die vom Gebläse 11 bzw. einem Motor und Lüfterrad des Gebläses 11 verursacht werden, absorbieren, um so eine Schwingung insbesondere zwischen den Verbindungsabschnitten 10, 12 von Gebläse 11 und Mischeinrichtung 13 und damit eine ungewünschte Geräuschentwicklung zu vermeiden.

Im gezeigten Ausführungsbeispiel, in welchem der Verbindungsabschnitt 10 des Gebläses 11 den Verbindungsabschnitt 12 der Mischeinrichtung 13 konzentrisch umgibt, umgibt der Vibrationsabsorber 15 den Verbindungsabschnitt 12 der Mischeinrichtung 13 konzentrisch. Erfindungsmäßig umgibt der Verbindungsabschnitt 10 des Gebläses 11 den Vibrationsabsorber 15 konzentrisch.

Im Sinne der hier vorliegenden Erfindung ist der aus einem relativ weichen, elastischen Werkstoff gebildete Vibrationsabsorber 15 um den Verbindungsabschnitt 12 der Mischeinrichtung 13 herum gestülpt und in seiner Relativposition zum Verbindungsabschnitt 12 der Mischeinrichtung 13 fixiert, nämlich dadurch, dass Vorsprünge 16 des Verbindungsabschnitts 12 der Mischeinrichtung 13 in Ausnehmungen 17 des Vibrationsabsorbers 15 eingreifen. Hierdurch kann sowohl die Relativposition von Vibrationsabsorber 15 und Verbindungsabschnitt 12 der Mischeinrichtung 13 in Umfangsrichtung als auch in Axialrichtung fixiert werden.

Der Verbindungsabschnitt 10 des Gebläses 11 wird durch einen Bajonettverschluss um den Vibrationsabsorber 15 herum angeordnet und durch denselben in seiner Relativposition zum Vibrationsabsorber 15 fixiert, wobei Schlitze 18 des Bajonettverschlusses dem Vibrationsabsorber 15 und in die Schlitze 18 eingreifende, nicht-gezeigte Stege des Bajonettverschlusses dem Verbindungsabschnitt 10 des Gebläses 11 zugeordnet sind.

Den Figuren kann entnommen werden, dass die Vorsprünge 16 des Verbindungsabschnitts 12 des Gebläses 13 einer Außenwandung des Verbindungsabschnitts 12 zugeordnet sind. Die Ausnehmungen 17, in welche die Vorsprünge 16 eingreifen, sind einer Innenwandung des Vibrationsabsorbers 15 zugeordnet. Die Schlitze 18 für den Bajonettverschluss sind hingegen einer Außenwandung des Vibrationsabsorbers 15 zugeordnet. Die korrespondierenden Stege des Bajonettverschlusses sind einer Innenwandung des Verbindungsabschnitts 10 des Gebläses 11 zugeordnet.

Im Unterschied zum gezeigten Ausführungsbeispiel ist es auch möglich, dass der Vibrationsabsorber einen Verbindungsabschnitt eines Gebläses konzentrisch umgibt, und dass der Verbindungsabschnitt der Mischeinrichtung den Vibrationsabsorber konzentrisch umgibt. Dieses Ausführungsbeispiel ist allerdings nicht im Sinne der hier vorliegender Erfindung.

Ebenso können im Unterschied zum gezeigten Ausführungsbeispiel die zusammenwirkenden Vorsprünge 16 und Ausnehmungen 17, welche der Fixierung des Vibrationsabsorbers 15 am Verbindungsabschnitt 12 der Mischeinrichtung 13 dienen, sowie die zusammenwirkenden Schlitze und Vorsprünge des Bajonettverschlusses, die der Fixierung des Verbindungsabschnitts 10 des Gebläses 11 am Vibrationsabsorber 15 dienen, jeweils dem anderen Bauteil zugeordnet sein. So ist es möglich, dass im Unterschied zum gezeigten Ausführungsbeispiel die Vorsprünge 16 dem Vibrationsabsorber 15 und die Ausnehmungen 17 dem Verbindungsabschnitt 12 der Mischeinrichtung 13 zugeordnet sind. Ebenso ist es möglich, dass Schlitze des Bajonettverschlusses dem Verbindungsabschnitt 10 des Gebläses 11 und entsprechende Vorsprünge des Bajonettverschlusses dem Vibrationsabsorber 15 zugeordnet sind.

Wie Fig. 1 entnommen werden kann, bildet der Vibrationsabsorber 15 an einem stromaufwärtigen Ende einen Anschlag für den Verbindungsabschnitt 12 der Mischeinrichtung 13 aus. Ebenso bildet der Verbindungsabschnitt 10 des Gebläses 11 einen Anschlag für das stromaufwärtige Ende des Vibrationsabsorbers 15 aus. Diese Anschläge dienen ebenfalls der Fixierung der Relativposition der Baugruppen zueinander in Axialrichtung.

Durch die Verwendung eines elastischen Vibrationsabsorbers zwischen dem Verbindungsabschnitt 12 der Mischeinrichtung 13 und dem Verbindungsabschnitt 10 des Gebläses 11 werden mechanische Vibrationen, die vom Gebläse 11 herrühren, absorbiert, wodurch eine unerwünschte Geräuschentwicklung der erfindungsgemäßen Vorrichtung zur Bereitstellung eines Gas-Nerbrennungsluft-Gemischs vermieden werden kann.

Weiterhin wird eine einfache und schnelle Verbindbarkeit der einzelnen Baugruppen zueinander gewährleistet.

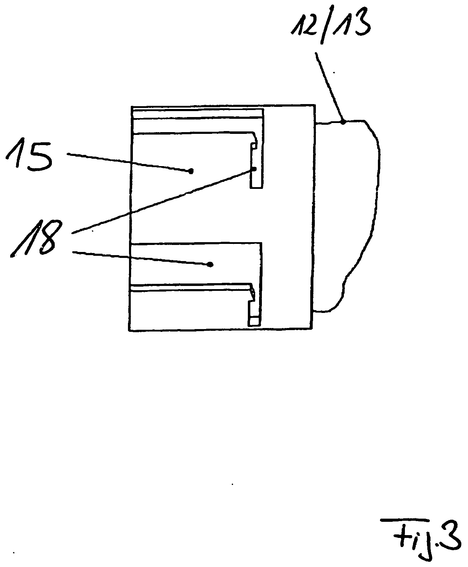

Gemäß Fig. 3 sind Schlitze 18 des Bajonettverschlusses in Umfangsrichtung zueinander versetzt, so dass demnach das Gebläse 11 in unterschiedlichen Umfangspositionen relativ zum Vibrationsabsorber 15 und damit zum Verbindungsabschnitt 12 der Mischeinrichtung 13 angreifen kann.

### Bezugszeichenliste

- 10: Verbindungsabschnitt
- 11: Gebläse
- 12: Verbindungsabschnitt
- 13: Mischeinrichtung
- 14: Verbrennungsluftstrom
- 15: Vibrationsabsorber
- 16: Vorsprung
- 17: Ausnehmung
- 18: Schlitz

## Patentansprüche

1. Vorrichtung zur Bereitstellung eines Gas-/Verbrennungsluft-Gemischs für einen Gasbrenner, mit einem Gebläse zur Bereiststellung eines Verbrennungsluftstroms, mit einem Gasregelgerät zur Bereitstellung eines Gasstroms und mit einer Mischeinrichtung zur Mischung des Verbrennungsluftstroms und des Gasstroms und damit zur Bereitstellung des Gas-/Verbrennungsluft-Gemischs, wobei einerseits die Mischeinrichtung und das Gebläse und andererseits die Mischeinrichtung und das Gasregelgerät miteinander verbunden sind, wobei die Mischeinrichtung (13) und das Gebläse (11) derart miteinander verbunden sind, dass zwischen einem Verbindungsabschnitt (12) der Mischeinrichtung (13) und einem Verbindungsabschnitt (10) des Gebläses (11) ein Vibrationsabsorber (15) aus einem relativ weichen, elastischen Werkstoff derart angeordnet ist, dass der elastische Vibrationsabsorber (15) den Verbindungsabschnitt (12) der Mischeinrichtung (13) konzentrisch umgibt, **dadurch gekennzeichnet, dass** der Verbindungsabschnitt (10) des Gebläses (11) den elastischen Vibrationsabsorber (15) konzentrisch umgibt, wobei der elastische Vibrationsabsorber (15) um den Verbindungsabschnitt (12) der Mischeinrichtung (13) herum gestülpt und in seiner Relativposition zum Verbindungsabschnitt (12) der Mischeinrichtung (13) dadurch fixiert ist, dass Vorsprünge (16) des Verbindungsabschnitts (12) der Mischeinrichtung (13) in Ausnehmungen (17) des Vibrationsabsorbers (15) eingreifen.

2. Vorrichtung nach Anspruch 1, **dadurch gekennzeichnet, dass** der Vibrationsabsorber (15) aus einem Elastomerwerkstoff gebildet ist.

3. Vorrichtung nach Anspruch 1 oder 2, **dadurch gekennzeichnet, dass** der Verbindungsabschnitt (10) des Gebläses (11) durch einen Bajonettverschluss um den Vibrationsabsorber (15) herum angeordnet und in seiner Relativposition zum Vibrationsabsorber fixiert ist, wobei vorzugsweise Schlitze (18) des Bajonettverschlusses dem Vibrationsabsorber (15) und Stege des Bajonettverschlusses dem Verbindungsabschnitt (10) des Gebläses (11) zugeordnet sind.

4. Vorrichtung nach einem der Ansprüche 1 bis 3, **dadurch gekennzeichnet, dass** die Mischeinrichtung (13) stromabwärts des Gebläses (11) an demselben angreift.

5. Vorrichtung nach einem der Ansprüche 1 bis 3, **dadurch gekennzeichnet, dass** die Mischeinrichtung stromaufwärts des Gebläses an demselben angreift.

6. Vorrichtung nach einem der Ansprüche 1 bis 5, **dadurch gekennzeichnet, dass** die Mischeinrichtung eine Venturi-Düse umfasst.

7. Vorrichtung nach einem der Ansprüche 1 bis 6, **dadurch gekennzeichnet, dass** die Mischeinrichtung eine Mess-Düse umfasst.

## Claims

1. Device for providing a gas/combustion air mixture for a gas burner, with a fan for providing a combustion air flow, with a gas regulating device for providing a gas flow, and with a mixing device for mixing the combustion air flow and the gas flow and therefore for providing the gas/combustion air mixture, wherein on one side the mixing device and the fan are interconnected and on the other side the mixing device and the gas regulating device are interconnected, wherein the mixing device (13) and the fan (11) are interconnected in such a way that a vibration absorber (15), formed from a relatively soft, elastic material, is arranged between a connecting section (12) of the mixing device (13) and a connecting section (10) of the fan (11) in such a way that the elastic vibration absorber (15) concentrically encompasses the connecting section (12) of the mixing device (13), **characterized in that** the connecting section (10) of the fan (11) concentrically encompasses the elastic vibration absorber (15), wherein the elastic vibration absorber (15) is pulled over the connecting section (12) of the mixing device (13) and fixed in its relative position to the connecting section (12) of the mixing device (13) by projections (16) of the connecting section (12) of the mixing device (13) engaging in recesses (17) of the vibration absorber (15).

2. Device according to Claim 1, **characterized in that** the vibration absorber (15) is formed from an elastomer material.

3. Device according to Claim 1 or 2, **characterized in that** by means of a bayonet connector the connecting section (10) of the fan (11) is arranged around the vibration absorber (15) and fixed in its relative position to the vibration absorber, wherein slots (18) of the bayonet connector are preferably associated with the vibration absorber (15) and pins of the bayonet connector are preferably associated with the connecting section (10) of the fan (11).

4. Device according to one of Claims 1 to 3, **characterized in that** the mixing device (13) acts on the fan (11) downstream of this.

5. Device according to one of Claims 1 to 3, **characterized in that** the mixing device acts on the fan upstream of this.

6. Device according to one of Claims 1 to 5, **characterized in that** the mixing device comprises a Venturi nozzle.

7. Device according to one of Claims 1 to 6, **characterized in that** the mixing device comprises a metering nozzle.

## Revendications

1. Dispositif destiné à fournir un mélange de gaz/air de combustion à un brûleur à gaz, comprenant une soufflante destinée à fournir un flux d'air de combustion, avec un appareil de régulation de gaz destiné à fournir un flux de gaz et avec un dispositif de mélange destiné à mélanger le flux d'air de combustion et le flux de gaz et à fournir ainsi le mélange de gaz/air de combustion, le dispositif de mélange et la soufflante d'une part et le dispositif de mélange et l'appareil de régulation de gaz d'autre part étant connectés l'un à l'autre, le dispositif de mélange (13) et la soufflante (11) étant connectés l'un à l'autre de telle sorte qu'entre une section de connexion (12) du dispositif de mélange (13) et une section de connexion (10) de la soufflante (11) soit disposé un absorbeur de vibration (15) en un matériau relativement mou, élastique, de telle sorte que l'absorbeur de vibration élastique (15) entoure concentriquement la section de connexion (12) du dispositif de mélange (13), **caractérisé en ce que** la section de connexion (10) de la soufflante (11) entoure concentriquement l'absorbeur de vibration élastique (15), l'absorbeur de vibration élastique (15) étant replié autour de la section de connexion (12) du dispositif de mélange (13) et étant fixé dans sa position relative par rapport à la section de connexion (12) du dispositif de mélange (13) par le fait que des saillies (16) de la section de connexion (12) du dispositif de mélange (13) viennent en prise dans des évidements (17) de l'absorbeur de vibration (15).

2. Dispositif selon la revendication 1, **caractérisé en ce que** l'absorbeur de vibration (15) est formé d'un matériau élastomère.

3. Dispositif selon la revendication 1 ou 2, **caractérisé en ce que** la section de connexion (10) de la soufflante (11) est disposée par une fermeture à baïonnette autour de l'absorbeur de vibration (15) et est fixée dans sa position relative par rapport à l'absorbeur de vibration, des fentes (18) de la fermeture à baïonnette étant de préférence associées à l'absorbeur de vibration (15) et des nervures de la fermeture à baïonnette étant associées à la section de connexion (10) de la soufflante (11).

4. Dispositif selon l'une quelconque des revendications 1 à 3, **caractérisé en ce que** le dispositif de mélange (13) vient en prise en aval de la soufflante (11) avec cette dernière.

5. Dispositif selon l'une quelconque des revendications 1 à 3, **caractérisé en ce que** le dispositif de mélange est en prise en amont de la soufflante avec cette dernière.

6. Dispositif selon l'une quelconque des revendications 1 à 5, **caractérisé en ce que** le dispositif de mélange comprend une buse Venturi.

7. Dispositif selon l'une quelconque des revendications 1 à 6, **caractérisé en ce que** le dispositif de mélange comprend une buse de mesure.
